# EUROPÄISCHE PATENTSCHRIFT

(11) **EP 2 601 391 B1**
(45) Veröffentlichungstag und Bekanntmachung des Hinweises auf die Patenterteilung: **21.05.2014**
(21) Anmeldenummer: 11733800.4
(22) Anmeldetag: 15.07.2011
(51) Int. Cl.: F01P 11/02

(54) **AUSGLEICHSBEHÄLTER FÜR EINEN KÜHLMITTELKREISLAUF**
EQUALIZING CONTAINER FOR A COOLANT CIRCUIT
RÉCIPIENT DE COMPENSATION POUR UN CIRCUIT DE LIQUIDE DE REFROIDISSEMENT

(30) Priorität: 07.08.2010 DE 102010033715
(43) Veröffentlichungstag der Anmeldung: 12.06.2013
(73) Patentinhaber: Audi AG, 85045 Ingolstadt (DE)
(72) Erfinder: HAAS, Uwe, 85134 Stammham (DE); ANZENBERGER, Thomas, 85053 Ingolstadt (DE)
(86) Internationale Anmeldenummer: PCT/EP2011/003528
(87) Internationale Veröffentlichungsnummer: WO 2012/019686

(56) Entgegenhaltungen:
- DE-C1- 4 025 067
- JP-U- 61 029 021
- US-A- 3 077 927

## Beschreibung

Ausgleichsbehälter für einen Kühlmittelkreislauf, aufweisend mindestens einen Zulaufanschluss und einen Ablaufanschluss, sowie eine von einem Deckel verschließbare Befüllöffnung, wobei in den Deckel ein differenzdruckgesteuertes Ventil mit mindestens zwei Schaltstellungen integriert ist.

Derartige Ausgleichsbehälter werden in Kühlmittelkreisläufen von Brennkraftmaschinen, insbesondere für Kraftfahrzeuge, eingesetzt, um Luft aus dem Kühlmittelkreislauf abzuscheiden, den Volumenzuwachs des Kühlmittels bei dessen Erwärmung auszugleichen, den Kühlmittelkreislauf zu befüllen und einen Überdruck zur Vermeidung siedenden Kühlmittels aufzubauen.

Die DE 40 39 993 A1 offenbart eine Entlüftungsleitung im Kühlkreis einer Brennkraftmaschine, wobei die Entlüftungsleitung einen Kühler mit einem bezüglich seiner Decke höher gelegenen Ausgleichsbehälter an einem oberen Abschnitt des Ausgleichsbehälters verbindet. Der Ausgleichsbehälter besitzt einen mit einem Deckel verschließbaren Einfüllstutzen in der Decke, wobei der Deckel mit einem Überdruckventil versehen ist. Ein Rohrelement der Entlüftungsleitung taucht am oberen Abschnitt in den Ausgleichsbehälter ein und besitzt eine Öffnung in der Nähe des Behälterbodens. Das Rohrelement ist im Bereich seiner höchsten Stelle im Ausgleichsbehälter mit einem zur Atmosphäre hin öffenbaren Anschluss versehen, wobei der Anschluss durch einen im Einfüllstutzen zum Innenraum des Ausgleichsbehälters hin abgeschlossenen Raum gebildet ist, welcher bei verschlossenem Einfüllstutzen zur Atmosphäre hin abgedeckt ist. Dadurch kann die beim Befüllen des Ausgleichsbehälters und des Kühlers verdrängte Luft über den offenen Raum durch den Einfüllstutzen abziehen. Während des Fahrbetriebs wird die Luft bei geschlossenem Einfüllstutzen über den Raum zur Abdeckung gedrängt, welche bei Übersteigen eines von der Art der Abdeckung abhängigen Druckwerts angehoben wird, so dass der Ausgleichsbehälter in die Atmosphäre entlüften kann.

Nachteilig an einem derartigen Ausgleichsbehälter ist, dass die Entlüftungsleitung während eines Warmlaufbetriebs des Kühlkreises nicht zuverlässig absperrbar ist, so dass ein unerwünschter Wärmeeintrag aus dem Kühlkreis in den Ausgleichsbehälter möglich ist. Weiterhin eignet sich der Ausgleichsbehälter nicht für Kühlkreise, die permanent unter Überdruck betrieben werden sollen, da ab einer bestimmten Druckschwelle eine Entlüftung zur Atmosphäre hin erfolgt, wodurch sich der Überdruck abbaut.

Aufgabe der vorliegenden Erfindung ist es daher einen Ausgleichsbehälter für einen mit Überdruck betriebenen Kühlmittelkreislauf bereitzustellen, der einer möglichst raschen Erwärmung des Kühlmittels zuträglich ist.

Diese Aufgabe wird durch die Merkmale des Patentanspruchs 1 bzw. 6 gelöst.

Ausgleichsbehälter für einen Kühlmittelkreislauf, aufweisend eine von einem Deckel verschließbare Befüllöffnung im geodätisch oberen Bereich des Ausgleichsbehälters, wobei in den Deckel ein differenzdruckgesteuertes Ventil mit mindestens zwei Schaltstellungen integriert ist, sowie mindestens einen Zulaufanschluss, der in einen Deckelbereich mündet, und einen Ablaufanschluss im geodätisch unteren Bereich des Ausgleichsbehälters, wobei der Zulaufanschluss durch das Ventil in einer ersten Schaltstellung verschlossen und in mindestens einer zweiten Schaltstellung freigegeben ist, wodurch der Zulaufanschluss in den Ausgleichsbehälter entlüften kann.

Indem in den Deckel des Ausgleichsbehälters ein differenzdruckgesteuertes Ventil integriert ist, kann der Zulaufanschluss in einer ersten Schaltstellung verschlossen und in einer zweiten Schaltstellung freigegeben werden. In der ersten Schaltstellung besteht somit kein Kühlmittelfluss durch den Ausgleichsbehälter, wodurch sich während dieser Phase das Kühlmittel im Kühlmittelkreislauf rasch erwärmen kann. In der zweiten Schaltstellung des Ventils, die eingenommen wird wenn ein ausreichender Differenzdruck zwischen dem Innern des Ausgleichsbehälters und der Atmosphäre besteht, ist der Zulaufanschluss zumindest teilweise freigegeben, wodurch der Zulaufanschluss in den Ausgleichsbehälter entlüften kann. Dadurch lässt sich ein Kühlmittelkreislauf unter definiertem Überdruck betreiben, der sich zudem besonders schnell erwärmen lässt. Die Umschaltung des Ventils zwischen erster und zweiter Schaltstellung erfolgt selbsttätig. Somit ist der Kühlmittelkreislauf auch besonders betriebssicher. Bei nicht eingeschraubtem Deckel kann der Kühlmittelkreislauf einfach über den Ausgleichsbehälter befüllt werden, da das Ventil den Zulaufanschluss nicht absperren kann. Zudem findet während des Befüllens eine stetige Entlüftung statt. Der Ausgleichsbehälter ist vorzugsweise an der geodätisch höchsten Stelle im Kühlmittelkreislauf anzuordnen, damit in dem Kühlmittelkreislauf aufsteigende Gasblasen selbstständig in den Zulaufanschluss und je nach Schaltstellung des Ventils in den Ausgleichsbehälter gelangen können.

In einer bevorzugten Ausführung ist der Deckel in eine Zwischenposition oder eine Endposition einschraubbar; wobei der Zulaufanschluss in der Zwischenposition stets freigegeben ist. Wird der Deckel in eine Zwischenposition eingeschraubt, bei der der Zulaufanschluss stets freigegeben ist, so kann der Kühlmittelkreislauf besonders schnell über den Zulaufanschluss entlüftet werden, ohne dass Kühlmittel oder Gas über die Befüllöffnung in die Atmosphäre entweichen kann. Eine von dem Kühlmittelkreislauf mit Kühlmittel beaufschlagte Brennkraftmaschine kann bei einem in Zwischenposition eingeschraubten Deckel bereits betrieben werden. Wird der Deckel tiefer in die Endposition eingeschraubt, so regelt das differenzdruckgesteuerte Ventil die Entlüftung des Zulaufanschlusses in den Ausgleichsbehälter selbsttätig.

In einer bevorzugten Ausführung kann das Ventil eine dritte Schaltstellung einnehmen, bei der der Ausgleichsbehälter in die Atmosphäre entlüften kann. Durch diese dritte Schaltstellung kann das Ventil bei einer besonders hohen Druckdifferenz zwischen Ausgleichsbehälter und Atmosphäre eine Entlüftung des Ausgleichsbehälters in die Atmosphäre und somit einen Druckausgleich zum Schutz des Kühlmittelkreislaufs vornehmen.

In einer bevorzugten Ausführung weist das Ventil einen federbelasteten, axial geführten Ventilteller auf. Dadurch lässt sich auf besonders einfache Weise ein differenzdruckgesteuertes Ventil herstellen. Die Feder wirkt dabei dem Druck im Innern des Ausgleichsbehälters entgegen. Durch geeignete Anpassung der Federkennlinie lassen sich die zur Auslösung der einzelnen Schaltstellungen benötigten Differenzdrücke voreinstellen.

In einer bevorzugten Ausführung mündet der Zulaufanschluss radial an den Ventilteller, wobei der Ventilteller den Zulaufanschluss in der ersten Schaltstellung vollständig verschließt und in der zweiten Schaltstellung freigibt. In der ersten Schaltstellung befindet sich der Ventilteller auf Höhe des radial daran mündenden Zulaufanschlusses, wodurch der Zulaufanschluss von dem Ventilteller vollständig verdeckt ist. Wird die Feder des Ventiltellers durch den Differenzdrück komprimiert, so verschiebt sich der Ventilteller axial derart, dass der Zulaufanschluss zumindest teilweise freigegeben ist und entlüften kann. Indem der Zulaufanschluss radial an den Ventilteller mündet, können die Kräfte zur Betätigung des Ventils gering gehalten werden.

In einem Kühlmittelkreislauf mit erfindungsgemäßen Ausgleichsbehälter liegt eine Differenzdruck zwischen Zulaufanschluss und Ablaufanschluss vor. In einer bevorzugten Ausführung ist der Ablaufanschluss mit einer Kühlmittelpumpe strömungstechnisch verbunden, wodurch die Kühlmittelpumpe Kühlmittel aus dem Ausgleichsbehälter ansaugen kann. Der Zulaufanschluss ist so mit dem Kühlmittelkreislauf verbunden, dass Gasblasen aus diesem zu dem Ausgleichsbehälter gelangen können.

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
Fig. 1 einen Ausgleichsbehälter mit nicht eingeschraubtem Deckel;
Fig. 2 einen Ausgleichsbehälter mit in die Zwischenposition eingeschraubtem Deckel;
Fig. 3 einen Ausgleichsbehälter mit in die Endposition eingeschraubtem Deckel und Ventil in erster Schaltstellung;
Fig. 4 einen Ausgleichsbehälter mit in die Endposition eingeschraubtem Deckel und Ventil in zweiter Schaltstellung;
Fig. 5 einen Ausgleichsbehälter mit in die Endposition eingeschraubtem Deckel und Ventil in dritter Schaltstellung.

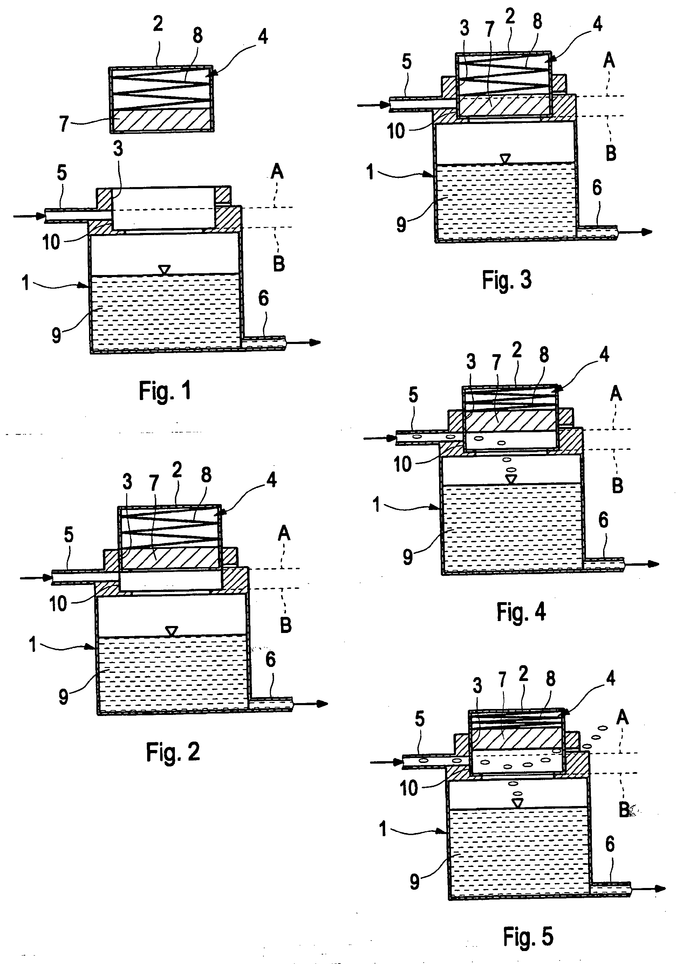

Allen Figuren 1 bis 5 gemein ist ein Ausgleichsbehälter 1, der teilweise mit Kühlmittel 9 befüllt ist, so dass sich oberhalb des Kühlmittels 9 ein Luftpolster ausbildet. In einem geodätisch oberen Bereich des Ausgleichsbehälters 1 befindet sich ein Deckelbereich 10 mit einer von einem Deckel 2 verschließbaren Befüllöffnung 3. Ein Zulaufanschluss 5 führt in den Ausgleichsbehälter 1 und mündet in den Deckelbereich 10. Der Deckelbereich 10 kann dazu vorzugsweise als eine käfigartige Struktur mit Gewindegängen zur Aufnahme des Deckels 2 ausgebildet sein. Der Zulaufanschluss 5 steht mit einem nicht dargestellten Wärmetauscher eines Kühlmittelkreislaufs oder einer nicht dargestellten Brennkraftmaschine, die in den Kühlmittelkreislauf eingebunden ist, in strömungstechnischer Verbindung, so dass Gase und/oder Kühlmittel 9 in den Ausgleichsbehälter 1 gelangen können. Durch einen in einem geodätisch unteren Bereich des Ausgleichsbehälters 1 angeordneten Ablaufanschluss 6 kann Kühlmittel 9 zu einer nicht dargestellten Kühlmittelpumpe gelangen. In den Deckel 2 ist ein differenzdruckgesteuertes Ventil 4 mit drei Schaltstellungen integriert. Das Ventil 4 besteht aus einem Ventilteller 7, der axial in dem Deckel 2 geführt und von einer Druckfeder 8 belastet ist. Die Kennlinie der Druckfeder 8 bestimmt dabei den für das Einnehmen der jeweiligen Schaltstellung benötigten Differenzdruck zwischen Ausgleichsbehälter 1 und Atmosphäre. Im vollständig eingeschraubten Zustand schließt der Ventilteller 7 den radial an diesen mündenden Zulaufanschluss 5 in der ersten Schaltstellung ab. In der zweiten und dritten Schaltstellung gibt der Ventilteller 7 durch die Kompression der Feder 8 den Zulaufanschluss 5 frei.

Fig. 1 zeigt den Ausgleichsbehälter 1 mit abgenommenen Deckel 2. Die Befüllöffnung 3 steht somit dauerhaft offen, wodurch der Zulaufanschluss 5 und der Ausgleichsbehälter 1 in die Atmosphäre entlüften können. In dieser Konfiguration kann der Ausgleichsbehälter 1 und der daran angeschlossene Kühlmittelkreislauf mit Kühlmittel 9 befüllt werden.

Fig. 2 zeigt den Ausgleichsbehälter 1 mit dem in eine Zwischenstellung A eingeschraubten Deckel 2. Die Zwischenstellung A zeichnet sich dadurch aus, dass der Zulaufanschluss 5 weiterhin freigegeben ist, aber die Befüllöffnung 3 gasdicht verschlossen ist. Somit kann der Zulaufanschluss 5 dauerhaft in den Ausgleichsbehälter 1 entlüften, wodurch eine besonders rasche Entlüftung des Kühlmittelkreislaufs möglich ist.

Fig. 3 zeigt den Ausgleichsbehälter 1 mit dem in eine Endstellung B eingeschraubten Deckel 2. Der Differenzdruck zwischen Ausgleichsbehälter 1 und Atmosphäre ist noch derart gering, dass der Ventilteller 7 in der ersten Schaltstellung den Zulaufanschluss 5 vollständig blockiert. Dadurch kann der Kühlmittelkreislauf nicht in den Ausgleichsbehälter 1 entlüften und die Brennkraftmaschine kann sich aufgrund der fehlenden Durchströmung des Ausgleichsbehälters 1 besonders schnell erwärmen.

Fig. 4 zeigt den Ausgleichsbehälter 1 mit dem in die Endstellung B eingeschraubten Deckel 2. Der Differenzdruck zwischen Ausgleichsbehälter 1 und Atmosphäre ist derart angestiegen, dass die Feder 8 komprimiert wird und der Ventilteller 7 in der zweiten Schaltstellung den Zulaufanschluss 5 zumindest teilweise freigibt. Dadurch kann der Zulaufanschluss 5 in den Ausgleichsbehälter 1 entlüften.

Fig. 5 zeigt den Ausgleichsbehälter 1 mit dem in die Endstellung B eingeschraubten Deckel 2. Der Differenzdruck zwischen Ausgleichsbehälter 1 und Atmosphäre ist derart stark angestiegen, dass die Feder 8 noch weiter komprimiert wird und der Ventilteller 7 in der dritten Schaltstellung den Zulaufanschluss 5 vollständig freigibt. Zusätzlich kann der Ausgleichsbehälter 1 über den Deckel 2 in die Atmosphäre entlüften. Dadurch können durch Überdruck bedingte Schäden am Kühlmittelkreislauf vermieden werden.

### Liste der Bezugszeichen:

- A: Zwischenposition
- B: Endposition

- 1: Ausgleichsbehälter
- 2: Deckel
- 3: Befüllöffnung
- 4: Ventil
- 5: Zulaufanschluss
- 6: Ablaufanschluss
- 7: Ventilteller
- 8: Feder
- 9: Kühlmittel
- 10: Deckelbereich

## Patentansprüche

1. Ausgleichsbehälter (1) für einen Kühlmittelkreislauf, aufweisend eine von einem Deckel (2) verschließbare Befüllöffnung (3) im geodätisch oberen Bereich des Ausgleichsbehälters (1), wobei in den Deckel (2) ein differenzdruckgesteuertes Ventil (4) mit mindestens zwei Schaltstellungen integriert ist, sowie mindestens einen Zulaufanschluss (5), der in einen Deckelbereich (10) mündet, und einen Ablaufanschluss (6) im geodätisch unteren Bereich des Ausgleichsbehälters (1), **dadurch gekennzeichnet, dass** der Zulaufanschluss (5) durch das Ventil (4) in einer ersten Schaltstellung verschlossen und in mindestens einer zweiten Schaltstellung freigegeben ist, wodurch der Zulaufanschluss (5) in den Ausgleichsbehälter (1) entlüften kann.

2. Ausgleichsbehälter nach Anspruch 1, **dadurch gekennzeichnet, dass** der Deckel (2) in eine Zwischenposition (A) oder eine Endposition (B) einschraubbar ist, wobei der Zulaufanschluss (5) in der Zwischenposition (A) stets freigegeben ist.

3. Ausgleichsbehälter nach Anspruch 1 oder 2, **dadurch gekennzeichnet, dass** das Ventil (4) eine dritte Schaltstellung einnehmen kann, bei der der Ausgleichsbehälter (1) in die Atmosphäre entlüften kann.

4. Ausgleichsbehälter nach einem der Ansprüche 1 bis 3, **dadurch gekennzeichnet, dass** das Ventil (4) einen federbelasteten axial geführten Ventilteller (7) aufweist.

5. Ausgleichsbehälter nach Anspruch 4, **dadurch gekennzeichnet, dass** der Zulaufanschluss (5) radial an den Ventilteller (7) mündet, wobei der Ventilteller (7) den Zulaufanschluss (5) in der ersten Schaltstellung vollständig verschließt und in der zweiten Schaltstellung freigibt.

6. Kühlmittelkreislauf mit einem Ausgleichsbehälter nach Anspruch 1, **dadurch gekennzeichnet, dass** eine Differenzdruck zwischen Zulaufanschluss (5) und Ablaufanschluss (6) vorliegt.

7. Kühlmittelkreislauf nach Anspruch 6, **dadurch gekennzeichnet, dass** der Ablaufanschluss (6) mit einer Kühlmittelpumpe strömungstechnisch verbunden ist.

## Claims

1. Expansion reservoir (1) for a coolant circuit, comprising a fill opening (3) that can be closed off by a lid (2) and is located in the geodetically upper region of the expansion reservoir (1), with a differential-pressure-controlled valve (4) having at least two switching positions being integrated in the lid (2), and at least one inlet connection (5) that opens into a lid portion (10), and an outlet connection (6) located in the geodetically lower region of the expansion reservoir (1), **characterised in that** the inlet connection (5) is closed off by the valve (4) in a first switching position and opened up in at least one second switching position, thereby enabling the inlet connection (5) to vent into the expansion reservoir (1).

2. Expansion reservoir according to claim 1, **characterised in that** the lid (2) can be screwed into an intermediate position (A) or an end position (B), the inlet connection (5) always being open in the intermediate position (A).

3. Expansion reservoir according to claim 1 or 2, **characterised in that** the valve (4) can assume a third switching position in which the expansion reservoir (1) is able to vent into the atmosphere.

4. Expansion reservoir according to one of claims 1 to 3, **characterised in that** the valve (4) comprises a spring-loaded axially guided valve disc (7).

5. Expansion reservoir according to claim 4, **characterised in that** the inlet connection (5) opens radially to the valve disc (7), with the valve disc (7) completely closing the inlet connection (5) in the first switching position and opening the inlet connection in the second switching position.

6. Coolant circuit having an expansion reservoir according to claim 1, **characterised in that** there is a pressure difference between the inlet connection (5) and the outlet connection (6).

7. Coolant circuit according to claim 6, **characterised in that** the outlet connection (6) is fluidically connected to a coolant pump.

## Revendications

1. Récipient de compensation (1) pour un circuit de liquide de refroidissement, présentant une ouverture de remplissage (3) refermable par un couvercle (2) dans la zone géodésiquement supérieure du récipient de compensation (1), où dans le couvercle (2) est intégrée une soupape commandée par pression différentielle (4) avec au moins deux positions de commutation, ainsi qu'au moins un raccord d'amenée (5) qui débouche dans une zone de couvercle (10), et un raccord d'évacuation (6) dans la zone géodésiquement inférieure du récipient de compensation (1), **caractérisé en ce que** le raccord d'amenée (5) est fermé dans une première position de commutation et est libéré dans au moins une seconde position de commutation par la soupape (4), par quoi le raccord d'amenée (5) peut purger l'air dans le récipient de compensation (1).

2. Récipient de compensation selon la revendication 1, **caractérisé en ce que** le couvercle (2) peut être vissé dans une position intermédiaire (A) ou dans une position finale (B), où le raccord d'amenée (5) est toujours libéré dans la position intermédiaire (A).

3. Récipient de compensation selon la revendication 1 ou 2, **caractérisé en ce que** la soupape (4) peut occuper une troisième position de commutation, dans le cadre de laquelle le récipient de compensation (1) peut purger l'air dans l'atmosphère.

4. Récipient de compensation selon l'une quelconque des revendications 1 à 3, **caractérisé en ce que** la soupape (4) présente une tête de soupape (7) guidée axialement, sollicitée par ressort.

5. Récipient de compensation selon la revendication 4, **caractérisé en ce que** le raccord d'amenée (5) débouche radialement sur la tête de soupape (7), où la tête de soupape (7) ferme complètement le raccord d'amenée (5) dans la première position de commutation et le libère dans la seconde position de commutation.

6. Circuit de liquide de refroidissement avec un récipient de compensation selon la revendication 1, **caractérisé en ce qu'**une pression différentielle règne entre le raccord d'amenée (5) et le raccord d'évacuation (6).

7. Circuit de liquide de refroidissement selon la revendication 6, **caractérisé en ce que** le raccord d'évacuation (6) est relié en écoulement à une pompe de liquide de refroidissement.
